# EUROPEAN PATENT APPLICATION

(11) **EP 4 145 678 A1**
(43) Date of publication of application: **08.03.2023**
(21) Application number: 21194996.1
(22) Date of filing: 06.09.2021
(51) Int. Cl.: H02K 1/20, H02K 1/32, H02K 9/19, H02K 7/00

(54) **ELECTRIC MACHINE**

(71) Applicant: MAHLE International GmbH, 70376 Stuttgart (DE)
(72) Inventor: SEVER, Peter, 9000 Murska Sobota (SI)
(74) Representative: BRP Renaud & Partner mbB Rechtsanwälte Patentanwälte Steuerberater

(57) **Abstract**

The invention relates to an electrical machine (1) which contains a rotor group (2) with a shaft (5) and a rotor (4) and a housing group (3) with a housing (7) and a stator (8). The rotor group (2) is rotatably mounted in the housing group (3). At least two cooling channels (14) are formed in the stator (8) and a first circulation chamber (13a) and a second circulation chamber (13b) are formed in the housing (7). The machine (1) further comprises a flow path (12) formed at least by the at least two cooling channels (14) and the two circulation chambers (13a, 13b).

According to the invention, a coolant inlet (16) and a coolant outlet (17) are formed in the flow path (12) and at axial ends (8a, 8b) of the stator (8). The cooling channels (14) extend axially through the entire stator (8) and can be flowed through in parallel and/or in series with one another in the flow path (12).

## Description

The invention relates to an electric machine comprising a rotor group comprising a shaft and a rotor and comprising a housing group comprising a housing and a stator according to the generic term of claim 1.

An electric machine generates heat during operation, which is dissipated by means of a cooling system which is usually an oil cooling system. US 10158263 B2 discloses an oil cooling system for an electric machine, whereby the oil is introduced centrally into the stator of the machine by means of the oil cooling system. DE 8110016 U1 discloses another oil-cooling system in which the oil is passed through the shaft of the machine and sprayed out of the shaft onto the stator on both sides. EP 3507889 B1 discloses a further oil cooling system of deviating design, in which the oil is divided and directed to deviating areas of the stator. In the known solutions, the entire volume of the oil is not available for cooling and thus cooling is not sufficiently efficient. Especially in the case of a flooded motor - a so-called wet runner - a satisfactory solution is missing.

It is therefore the object of the invention to provide an improved or at least alternative embodiment for an electric machine of the type described, in which the disadvantages described are overcome.

This object is solved according to the invention by the object of independent claim 1. Advantageous embodiments are the subject of the dependent claims.

The present invention is based on the general idea to use full amount of available coolant for cooling an electric machine and thereby to improve the cooling of the electric machine.

Electric machine contains a rotor group and a housing group. The rotor group contains a shaft which is rotatable about an axis of rotation and a rotor which is non-rotatably fixed to the shaft. The housing group contains a housing and a stator which is received in the housing. The rotor group is thereby rotatably arranged in the housing group, wherein the stator is radially adjacent to the rotor and encircles the rotor. A first circulation chamber axially adjacent to the stator is formed at a first axial end of the stator, and a second circulation chamber axially adjacent to the stator is formed at a second axial end of the stator and opposite to the first circulation chamber. At least two axially extending cooling channels are also formed in or on the stator. The machine thereby contains a flow path for guiding a coolant between the axial ends of the stator, wherein the flow path is formed at least by the at least two cooling channels and the two circulation chambers. According to the invention, a coolant inlet of the flow path is formed at the first and/or second axial end of the stator and a coolant outlet of the flow path is formed at the first and/or second axial end. The cooling channels extend axially through the entire stator and can be flowed through in the flow path in parallel and/or in series with one another.

In the present invention, the compound term "first/second" is used to simplify the description. In the context of the present invention, the individual terms "first" and "second" of the compound term "first/second" are always linked with an "and/or". Thus, in the machine, the "first" element and/or the "second" element may be present. In this case, the respective "first" element is exclusively associated with a further "first" element of the electrical machine or the first axial end of the stator, and the respective "second" element is exclusively associated with a further "second" element of the electrical machine or the second axial end of the stator. Where the individual terms "first" and "second" are not used in the composite term "first/second", they are to be understood in accordance with this usage. Moreover, in the present invention, the terms "axial" and "radial" always refer to the axis of rotation. The electric machine can be an electric motor, especially a flooded electric motor - i.e. a wet runner. In the preferred embodiment, the coolant is a mixture of a dielectric fluid and air. More preferably the dielectric fluid is oil.

In the machine according to the invention, the coolant inlet and the coolant outlet can be formed at one axial end. Then the cooling channels formed in the stator can guide the coolant in the flow path from one axial end to the other axial end and back. Thereby, the cooling channels can be connected in series or in series and in parallel with each other. Alternatively, the coolant inlet and the coolant outlet can be formed at the opposite axial ends. Then the cooling channels formed in the stator can lead from one axial end to the other axial end. Thereby, the cooling channels can be connected in parallel or in parallel and in series with each other. In both cases, the entire volume of the available coolant is guided through the respective cooling channels of the stator, thereby effectively cooling the stator. The flow path is formed at least by the cooling channels in the stator and the circulation chambers. The stator is located axially between the first circulation chamber and the second circulation chamber, and the circulation chambers are fluidically connected to each other by at least some cooling channels in the stator. The possible structure of the flow path is explained in more detail below.

In an advantageous embodiment, inlet and outlet ports might be provided on one, either first or second axial end of the stator, wherein at least the circulation chamber on the side of the inlet and outlet port is divided into at least two cavities with aim to provide an outlet chamber where the outlet flow stator channels is collected and released out of the electric machine enclosure.

Advantageously, the housing may contain a wall surrounding the axis of rotation and a first end plate closing the wall at the first axial end and a second end plate closing the wall at the second axial end. The first or second end plate may be integrally formed with the wall, thereby forming a pot-shaped housing body. The housing body may then be closed at the opposite first or second axial end with the first or second separate end plate. Alternatively, the two end plates may be formed separately from each other and from the wall. Thereby, at least one of the end plates may be provided or shared by another traction drive component - i.e. a gearbox housing - at least when the electric machine is assembled and installed into a target application. In both cases, the coolant outlet can be formed on the wall of housing targeting in radial direction or in the junction of wall and an end plate.

The shaft, and thereby the machine, may be connectable to a power transmission - i.e. gearbox - as an input or an output at the first axial end of the stator. To this end, the shaft may protrude from the housing at the first axial end for connection to the power transmission as input or output. The rotor group may be rotatably mounted in the housing at the first axial end by means of a first bearing and at the second axial end by means of a second bearing. The bearings may thereby be arranged - i.e. held - in the housing at the axial ends. For example, the respective bearings may be attached to the end plates of the housing of the electric machine. Alternatively, at least one of the bearings may be attached to a gearbox housing at least when mounted and installed into target application.

The level of the coolant within electric machine is defined by the position of an outlet port, which is preferably located above stator windings, more precisely, above the rotor/stator air gap and above the top most position of the windings head overhang with aim to flood all key heat sources and especially the wires, even when electric machine is running at low speeds or rotor is not operating at all. It is to be self-understood, that the coolant is released out of the electric machine cooling system through the outlet port, where the coolant is then collected in a sump and transferred - i.e. pumped - to the heat exchanger with aim to release the heat to the ambient or to a heat consumer.

In a further development of the machine, it can be provided that the stator contains at least two stator teeth alternated with at least two stator slots and each stator tooth and/or stator slot is assigned a channel group comprising at least one of the at least two cooling channels. In order to cool the stator uniformly, the respective channel groups may be identical to each other or the respective channel groups may contain the cooling channels in the identical number and/or in the identical arrangement and/or in the identical shape. If the cooling channels in the stator are connected in series with one another, the flow through the respective stator tooth i.e. the number and/or the arrangement and/or the shape of the cooling channels flowed through in one direction can be identical in the channel groups.

At least one of the at least two cooling channels can be formed between two adjacent stator teeth of the stator and/or in a stator tooth of the stator and/or on the stator tooth of the stator and/or in the yoke of the stator and/or on the outside of the stator in combination with the housing of the electric machine. Advantageously, the respective cooling channel may be formed such that the heat generated in the stator is dissipated as effectively as possible. In particular, the at least one cooling channel can be formed in such a way that wires of the stator carrying the electric current are cooled as effectively as possible. If the respective channel group contains several - but at least two - cooling channels, the respective cooling channels can be designed differently from one another or identically to one another.

In an advantageous embodiment of the machine, the shaft may contain a shaft cavity extending parallel to the axis of rotation. A coolant inlet can be provided in the shaft and can be adapted to introduce the coolant, in particular oil together with air, into the shaft cavity. The coolant inlet of the flow path can then lead into the shaft cavity at the first axial end, and the shaft cavity can be fluidically connected to the first and/or second circulation chamber. In the flow path, the coolant can then be introduced into the shaft cavity and flow through the shaft cavity into the first and/or second circulation chamber. The coolant can be introduced into the shaft cavity by an inlet aperture. From the first and/or second circulation chamber, the coolant may then flow into the first and/or second circulation chamber and via at least some cooling passages. Advantageously, the rotor group can transfer generated heat to the coolant in the shaft cavity and thereby the rotor group and in particular the rotor can be effectively cooled. The shaft cavity may be formed such that a circumferential speed of the coolant entrained by the shaft due to its rotation allows the slip of the coolant within the cavity itself and thereby the power required for acceleration of coolant to the rotational speed of rotor is significantly reduced. For this purpose, the shape and/or a diameter and/or the volume of the shaft cavity may be adapted accordingly. In particular, the diameter of the shaft cavity can increase in towards the centre of the electric machine in the axial direction from the coolant inlet.

Alternatively, the coolant inlet may be formed in the housing at the first or second axial end of the stator and lead into the first or second circulation chamber. In the flow path, the coolant may then be guided into the first or second circulation chamber and flow from the first or second circulation chamber into the second or first circulation chamber via at least some cooling passages. In this embodiment, the design of the rotor group can be simplified, thereby reducing costs as a tradeoff for thermal performance.

In an advantageous embodiment of the machine, all cooling channels in the stator can fluidically connect the first circulation chamber with the second circulation chamber and can thus be flowed through parallel to each other in the flow path. In this way, the entire volume of the available coolant flows through the stator in the same direction and the stator can be cooled effectively. Alternatively, it can be provided that an outlet chamber is formed at the first or second axial end of the stator. In this case, the outlet chamber may surround the axis of rotation and the first or second circulation chamber. Some cooling channels may then fluidically connect the first circulation chamber to the second circulation chamber, and the remaining cooling channels may fluidically connect the second or first circulation chamber to the outlet chamber. The outlet chamber is thus fluidically separated from the first or second circulation chamber i.e. only indirectly fluidically connected via the cooling channels and the other circulation chamber. Here, the cooling channels of the stator can be flowed through in series with each other in the flow path. In this case, the entire volume of the available coolant flows through the stator in two mutually opposite directions and the stator can be cooled effectively. In both cases, the coolant can be mixed and redistributed in the two circulation chambers.

In an advantageous further embodiment of the machine a first/second impeller can be provided on the first/second end surface of the rotor which is aligned transversely to the axis of rotation, the first/second impeller comprising a plurality of radially extending impeller blades. There is therefore no need for an external pump to propel the coolant through the electric machine. The pumping power of the first/second impeller and circulation of coolant in the first/second circulation chamber can significantly increase the performance of the machine, thus the continuous power of electric machine performance is essentially the same as the peak power of the electric machine.

At least two first/second impeller blades may be formed on a first/second surface of the rotor and a first/second delimiting surface may be formed in the housing.

The first/second surface is aligned transversely to the axis of rotation and faces the first/second axial end. The first/second delimiting surface is aligned transversely to the axis of rotation and faces the first/second impeller blades. The first/second impeller blades of the rotor and the first/second delimiting surface are spaced apart from each other and together form a first/second impeller of the rotor. By means of the first/second impeller, the coolant may be pumped into the first/second circulation chamber and thereby conveyed in the flow path. Advantageously, this allows the coolant to be introduced into the machine at ambient pressure and conveyed purely by the first/second impeller in the flow path.

A back wall of the first/second impeller carries the impeller blades and can advantageously extend in the axial direction away from the rotor in the radially outer region of the impeller, for imparting an axial component to the flow through the first/second impeller away from the rotor. This allows the coolant to be directed away from the rotor, in particular away from a radial gap between the rotor and the stator. This has the effect of minimizing cooling fluid in the radial gap between the rotor and the stator which reduces drag losses.

Advantageously, the first/second delimiting surface may be formed by the stationary housing. For example, a first/second end plate of the housing aligned transversely to the axis of rotation may form the first/second delimiting surface. Alternatively, the first/second delimiting surface may be formed by a separate first/second element disposed within the housing. For example, the first/second delimiting surface can be formed by a first/second disc-shaped flow barrier aligned transversely to the axis of rotation.

Alternatively, the first/second impeller comprises a flow barrier element or shroud axially delimiting a flow through the first/second impeller on one side, with a back wall of the first/second impeller or the rotor delimiting the flow through the first/second impeller on the rotor side. The flow can thereby be channeled through the impeller efficiently as there is no blade tip clearance to be accounted for.

The outer diameter of the flow barrier element can be less that the outer diameter of the first/second impeller to allow for a greater component of coolant flow in the axial direction out of the impeller

Advantageously the axial gap between the housing and the impeller, extending transversely to the axis of rotation, is minimized in the axial direction. Therefore, the work done by the impeller can maintain pressure in the first/second circulation chamber, instead of simply filing coolant towards the winding heads without maintaining a higher pressure in the first/second circulation chamber. In this way a sufficient pressure in the first/second circulation chamber is achieved to force the cooling fluid through the axially extending cooling channels in the stator.

In a preferred embodiment, whereby the coolant is released out of the shaft towards the impeller, the axial gap between the first/second impeller and the housing is less than 2mm at least on one side of the rotor. Therefore, the hydraulic - i.e. pumping - performance of the impeller can be improved. It should be noted that that depending on the pressure requirements and or the direction of flow of the coolant into or out of one of the circulation chambers it may be advantageous to provide a minimized axial gap between an impeller and the housing only at one axial end of the machine, and not at both axial ends.

The axial width of the first/second impeller at the radially outer diameter is preferably in the range of 2-15 mm.

The radially inner surface of the first/second circulation chamber can be provided with a ring-shaped (around the rotation axis) radially outward projecting baffle in proximity to the axial gap, in order to hinder recirculating oil and air mixture from entering the axial gap between the impeller and the housing. The baffle extending radially beyond the second flow barrier element.

The first/second impeller blades can advantageously be backwardly inclined or backswept and/or arranged next to each other and around the axis of rotation. In addition, the first/second impeller blades can be identical to or different from each other. The design of the first/second impeller blades can thereby be adapted to the reduction of inherent noise and/or the optimization of the pumping performance of the first/second impeller. The first impeller and the second impeller may be identical to or different from each other. Accordingly, the impeller blades of the impellers can be identical to or different from each other.

Additionally, it may be provided that a first/second gap is formed between the first/second delimiting surface and the first/second impeller blades. The first/second gap extends transversely to the axis of rotation and provides an axial distance between the first/second delimiting surface and the first/second impeller blades. Advantageously, the first/second gap may be minimized. This allows the rotor to rotate unimpeded at the first/second delimiting surface and still maximize the pumping performance of the first/second impeller by minimizing the first/second gap. The first/second impeller can generate a pressure difference in the circulation chambers and pump the coolant between the circulation chambers via the cooling channels in the stator. In this case, the coolant can be introduced into the flow path under ambient pressure and an additional pump for pumping the coolant in the flow path is unnecessary.

Advantageously, it can be provided that at least two first/second vanes are formed on the first/second delimiting surface or on the housing. The first/second vanes can be arranged opposite and facing the first/second impeller blades of the rotor. The first/second vanes are stationary and can convey the coolant radially outward from the first/second gap between the first/second delimiting surface and the rotor. This can advantageously reduce hydraulic losses in the flow path.

The at least two first/second vanes can also be formed on the housing in in the first/second gap between the housing and the impeller, in particular between the flow barrier element or shroud of the impeller and the housing.

The first/second impeller may contain a tangentially outwardly directed first/second impeller outlet. In addition, the first/second impeller may contain a negative attack angle. This allows the coolant to be directed away from the rotating rotor or rotor group, thereby reducing entrainment of the coolant by the rotor or rotor group. This can reduce drag losses in the machine and improve cooling of the stator. In particular, the lowest wires of the winding heads of the stator which project into the first/second circulation chamber and are the most critical due to the AC losses caused by the skin effect and proximity effect can be efficiently cooled.

The winding heads are advantageously directly cooled by the coolant. The term "direct cooling" means that the winding heads are not covered or overmolded and the coolant can flow between the winding wires. (Each individual wire by however comprise an insulation layer).

Alternatively, or additionally, the first/second impeller may contain a first/second impeller outlet, wherein a circumferential first/second rim and/or a circumferential first/second labyrinth seal surrounds the first/second impeller outlet. Advantageously, this allows the coolant flowing out of the first/second impeller to be directed away from the rotating rotor or rotor group, thereby reducing entrainment of the coolant by the rotor or rotor group. The first/second rim and/or the first/second labyrinth seal may then be formed on a first/second flow barrier disposed in the first/second circulation chamber. In another embodiment, the first/second rim is attached to the stator and projects axially from the stator and extends radially over the radial gap between the rotor and the stator, and may or may not form part of the disc shaped flow barrier. The dielectric fluid and air mixture which circulate in the first/second circulation chamber is therefore hindered in entering the radial gap between the rotor and the stator. This is especially important for embodiments where a high pressure is generated by the impeller in order to force the air and dielectric fluid mixture axially through the stator to cool the stator.

Advantageously, a first/second flow barrier element can be formed on the rotor at the first/second axial end of the stator. The first/second flow barrier element can be aligned transversely to the axis of rotation and faces the first/second delimiting surface. The first/second flow barrier element can thereby prevent the coolant from flowing to the first/second delimiting surface and thereby reduce the hydraulic losses in the first/second impeller.

In an advantageous embodiment of the machine, a disk-shaped first/second flow barrier aligned transversely to the axis of rotation may be arranged in the first/second circulation chamber. The first/second flow barrier can restrict the flow of coolant in the first/second circulation chamber, thereby reducing the power needed for impeller to operate. In this regard, the first/second flow barrier can be of different designs and be adapted to the design of the respective flow path. Between the first/second flow barrier and the housing, a feeding channel - i.e. a gap - for the first/second impeller may advantageously be formed. The feeding channel can be aligned transversely to the axis of rotation. With the aid of the feeding channel, the coolant circulates in the first/second circulation chamber in a controlled manner, wherein the coolant is guided into the area radially inwards of the impeller blades with aim to feed back to the first/second impeller and to provide a circulation of the coolant in circulation chamber.

Advantageously, it may be provided that the first/second flow barrier represents the first/second delimiting surface for the first/second impeller of the rotor. In other words, the first/second impeller may be formed by the first/second impeller blades and the first/second flow barrier. Accordingly, the first/second gap in the first/second impeller may also be formed between the first/second impeller blades and the first/second flow barrier. Alternatively, the respective delimiting surface can be formed by the housing itself - as already described above.

In an advantageous embodiment of the machine, the housing may include a first/second dividing element. The first/second dividing element may be arranged in the first/second circulation chamber and divide the first/second circulation chamber into at least two fluidically connected first/second chambers. By means of the dividing element, the flow of the coolant in the flow path can be adapted and thereby improved or optimized.

Further important features and advantages of the invention are apparent from the subclaims, from the drawings, and from the accompanying figure description based on the drawings.

It is understood that the above features and those to be explained below can be used not only in the combination indicated in each case, but also in other combinations or on their own, without departing from the scope of the present invention.

Preferred embodiments of the invention are shown in the drawings and will be explained in more detail in the following description, wherein identical reference signs refer to identical or similar or functionally identical components.

It shows, each schematically
- Fig. 1: a sectional view of an electric machine according to the invention in a first embodiment;
- Fig. 2: a sectional view of the electric machine according to the invention in a second embodiment;
- Fig. 3: an another sectional view of the electric machine according to the invention in the first embodiment;
- Figs. 4 and 5: a top view and a view of the electric machine according to the invention in the first embodiment;
- Fig. 6: a further sectional view of the electric machine according to the invention in the first embodiment;
- Fig. 7: a sectional view of the electric machine according to the invention in the first embodiment;
- Figs. 8 and 9: sectional views of the electric machine in the first embodiment at one axial end;
- Figs. 10 and 11: sectional views of the electric machine in the first embodiment at the axial end;
- Fig. 12: a view of an end plate in the electrical machine in the first embodiment.

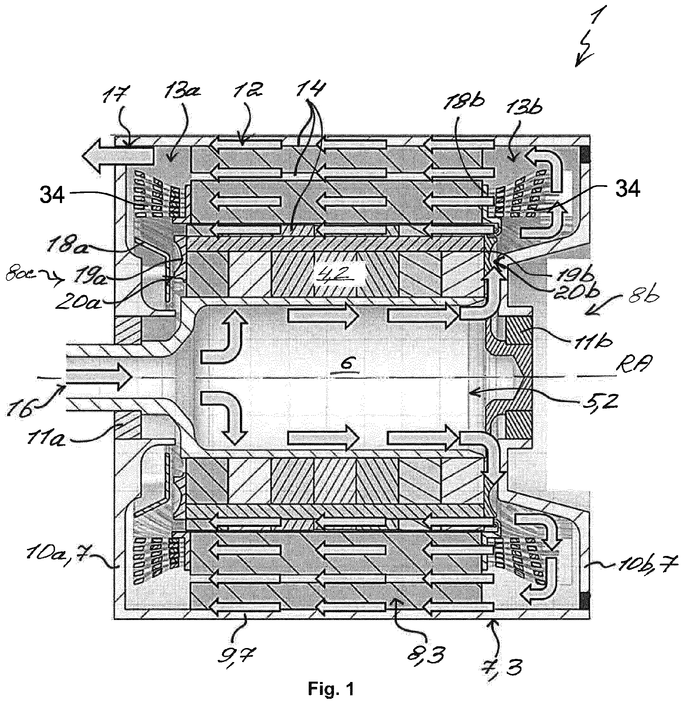

Fig. 1 shows a sectional view of an electric machine 1 according to the invention in a first embodiment. The machine 1 contains a rotor group 2 and a housing group 3. The rotor group 2 comprises a shaft 5 with a shaft cavity 6 and a rotor 4 non-rotatably mounted on the shaft 5. The shaft 5 and therefore the whole rotor group 2 are rotatable about an axis of rotation RA. The housing group 3 comprises a housing 7 and a stator 8 non-rotatably arranged in the housing 7. The rotor group 2 is rotatably arranged in the housing group 3. The stator 8 and the rotor 4 are radially adjacent to each other and the stator 8 encircle the rotor 4 at a distance.

The stator 8 contains a first axial end 8a and a second axial end 8b, which are axially spaced apart. At the first axial end 8a, the shaft 5 projects out of the housing 7 and can be connected to an input or an output. The housing 7 contains a wall 9 surrounding the axis of rotation RA and a first end plate 10a and a second end plate 10b. The first end plate 10a closes the wall 9 at the first axial end 8a and the second end plate 10b closes the wall 9 at the second axial end 8b, in each case transversely to the axis of rotation RA. In the machine 1 shown in Fig. 1, the first end plate 10a is formed integrally with the wall 9 and the second end plate 10b is formed separately from the wall 9. The rotor group 2 is rotatably arranged in the housing group 3, for which purpose the machine 1 contains a first bearing 11a and a second bearing 11b. The first bearing 11a is thereby arranged at the first axial end 8a of the stator 8 and the second bearing 11b is arranged at the second axial end 8b of the stator 8. The bearings 11a and 11b are non-rotatably fixed in the housing 7 and rotatably receive the shaft 5.

A first circulation chamber 13a and a second circulation chamber 13b are also formed in the housing 7. Here, the first circulation chamber 13a is arranged at the first axial end 8a between the first end plate 10a and the stator 8, and the second circulation chamber 13b is arranged at the second axial end 8b between the stator 8 and the second end plate 10b. The shaft cavity 6 of the shaft 5 is fluidically connected to the second circulation chamber 13b at the second axial end 8b. The stator 8 is located axially between the circulation chambers 13a and 13b, wherein lowermost wires of the winding heads 34 of the stator 8 projecting into the respective circulation chambers 13a and 13b. Several - but at least two - cooling channels 14 are formed in the stator 8, which extend axially and penetrate the stator 8 over its entire axial length. The cooling channels 14 are fluidically connected to the first circulation chamber 13a and to the second circulation chamber 13b.

For cooling the machine 1, a flow path 12 is formed in the machine 1 in which a coolant - preferably a mixture of a dielectric fluid and air - flows and cools the rotor 4 and the stator 8. The flow path 12 comprises the shaft cavity 6, the circulation chambers 13a and 13b and the cooling channels 14. In addition, a coolant inlet 16 is formed in the shaft cavity 6 of the shaft 5 and a coolant outlet 17 is formed in the first end plate 10a of the housing 7. Thereby, in the flow path 12, coolant successively flows through the coolant inlet 16, the shaft cavity 6, the second circulation chamber 13b, the cooling channels 14, the first circulation chamber 13a and the coolant outlet 17. The flow of the coolant in the flow path 12 is indicated by arrows in Fig. 1. In the first embodiment of the machine 1, all the cooling channels 14 connect the first circulation chamber 13a to the second circulation chamber 13b. The cooling channels 14 are flowed through in parallel with each other.

A disc-shaped first flow barrier 18a for restricting and directing the flow is arranged in the first circulation chamber 13a, and a disc-shaped second flow barrier 18b for restricting and directing the flow is arranged in the second circulation chamber 13b. Several - but at least two - backwardly inclined first impeller blades 19a are formed on the rotor 4. The impeller blades 19a face the first end plate 10a and the first flow barrier 18a, forming a first impeller 20a. A first gap between the first impeller blades 19a and the first flow barrier 18a is minimized. Several - but at least two - of backwardly inclined second impeller blades 19b are also formed on the rotor 4 and face the second end plate 10b. Thereby, a second impeller 20b is formed at the second axial end 8b of the stator 8. A second gap between the second impeller blades 19b and the second end plate 10b is thereby minimized. The impellers 20a and 20b can generate a pressure difference in the flow path 12 and cause the coolant to flow in the flow path 12. The coolant can thereby be introduced into the machine 1 at ambient pressure and be conveyed in the flow path 12 by the impellers 20a and 20b. The first impeller 20a and/or the second impeller 20b may be formed by overmolding at least part of the rotor 4. Alternatively, they form part of a balance ring which is attached to the rotor 4.

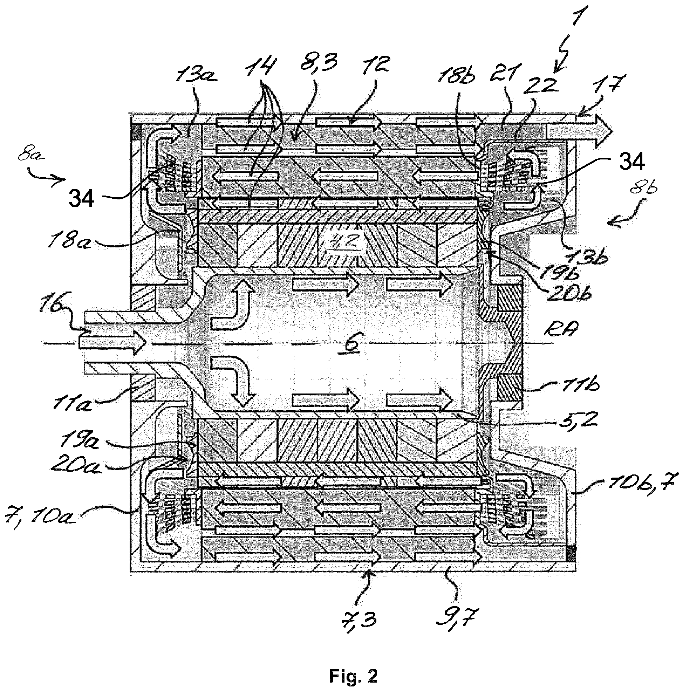

Fig. 2 shows a sectional view of the electric machine 1 according to the invention in a second embodiment. In the second embodiment, an outlet chamber 21 is formed at the second axial end 10b, which surrounds the second circulation chamber 13b with respect to the axis of rotation RA. The outlet chamber 21 and the second circulation chamber 13b are thereby separated from each other by a separating element 22. The coolant outlet 17 of the flow path 12 is formed in the second end plate 10b and guide out of the outlet chamber 21 to the outside. In the second embodiment, the coolant passes in the flow path 12 successively through the coolant inlet 16, the shaft cavity 6, the second circulation chamber 13b, some of the cooling channels 14, the first circulation chamber 13a, the remaining cooling channels 14, the outlet chamber 21, and the coolant outlet 17. The flow of the coolant in the flow path 12 is indicated by arrows in Fig. 2. In the second embodiment of the machine 1, some cooling channels 14 connect the first circulation chamber 13a with the second circulation chamber 13b and the remaining cooling channels 14 connect the first circulation chamber 13a with the outlet chamber 21. In the second embodiment of the machine 1, the cooling channels 14 can be flowed through in series with each other. In other aspects, the second embodiment of the machine 1 shown here is identical to the first embodiment of the machine 1 shown in Fig. 1.

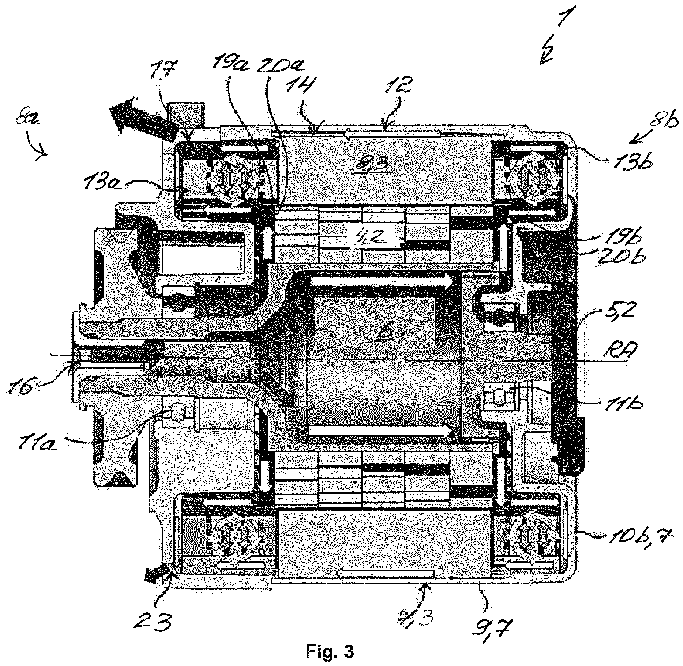

Fig. 3 shows another sectional view of the electrical machine 1 according to the invention in the first embodiment. Here, the machine 1 contains another outlet port designed as a drain opening 23 formed in the first end plate 10a at the first axial end 8a of the stator 8. In the machine 1 shown in Fig. 3, the second end plate 10b is formed integrally with the wall 9 and the second end plate 10a is formed separately from the wall 9. The flow of coolant in the machine 1 is indicated by arrows.

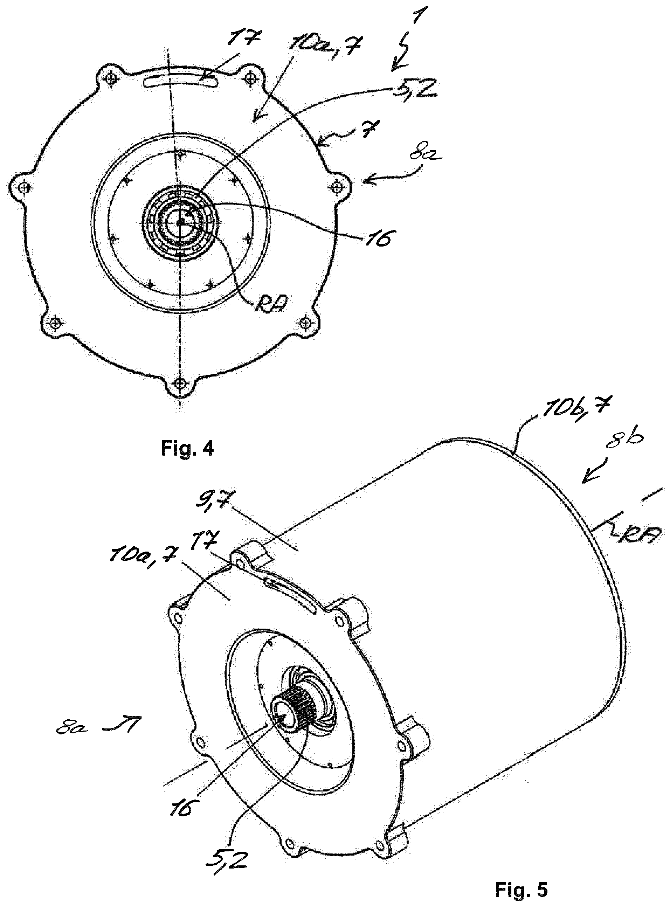

Fig. 4 shows a top view and Fig. 5 shows an isometric view of the electrical machine 1 according to the invention in the first embodiment. In the machine 1 shown here, the first end plate 10a and the second end plate 10b are formed separately from the wall 9. In operational ready alignment of the electric machine 1, the rotation axis RA is aligned parallel to the gravity force and the first circulation chamber 13a is arranged over the second circulation chamber 13b in regards to the gravity force. Thus, the coolant outlet 17 is arranged in the top most position in regards of gravity force to flood the interior of electric machine 1 enclosure to the level, where all key heat generating elements - i.e. wires, busbars - are flooded with coolant even when electric machine 1 is not operating. It is essential to notice, that at least one of the end plates 10a and 10b, preferably the first end plate 10a, may be the shared by another part of traction drive - i.e. gearbox housing.

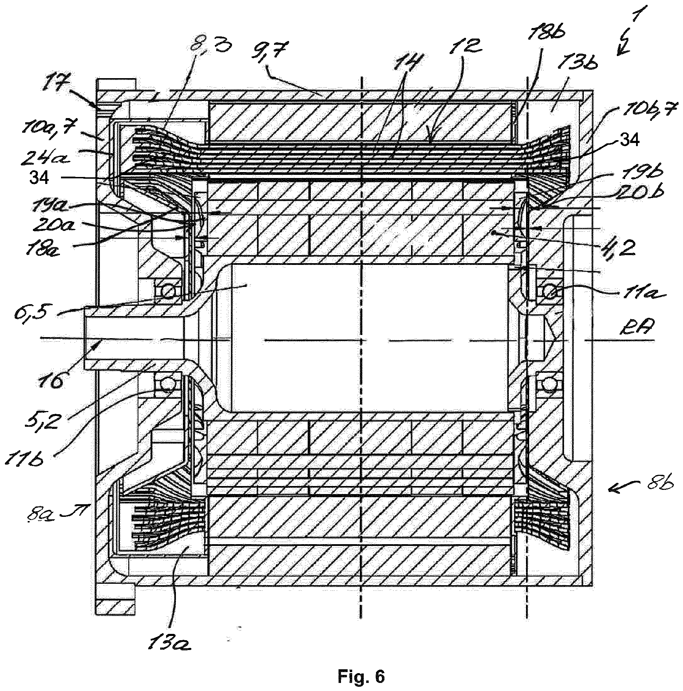

Fig. 6 shows a further sectional view of the electric machine 1 according to the invention in the first embodiment. Here, a first dividing element 24a is arranged in the first circulation chamber 13a, which divides the first circulation chamber 13a into several - but at least two - first chambers - i.e. cavities - within the first circulation chamber 10a. The first chambers are fluidically connected to each other. By means of the dividing element 24a, the flow of the coolant in the flow path 12 can be restricted and guided from one axial end of the stator to the other axial end of the stator.

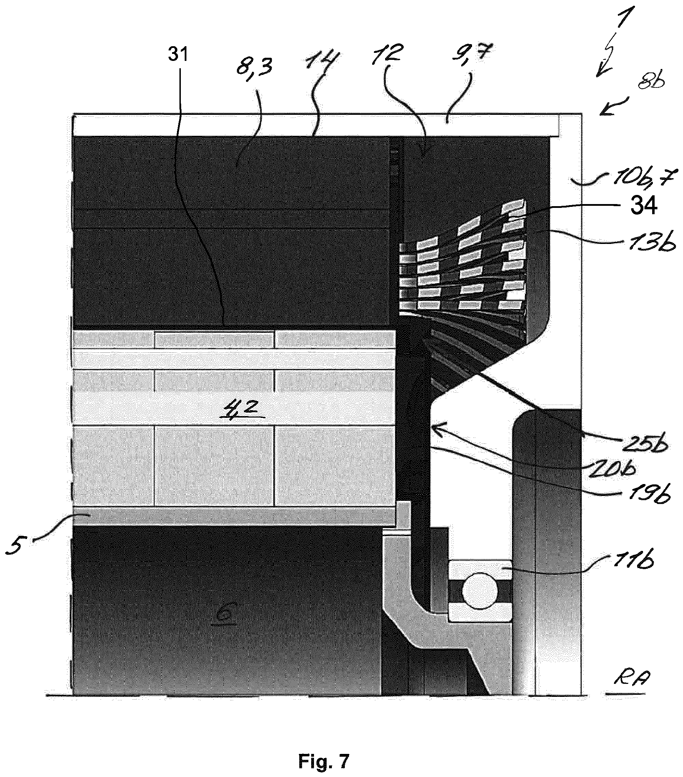

Fig. 7 shows a sectional view of a section of the electric machine 1 according to the invention in the first embodiment. Here, a second rim 25b is formed on the second flow barrier 18b. The second rim 25b can direct the coolant flowing away from the second impeller 20b and away from the rotating rotor 4 to reduce the drag losses and power required to operate the impeller. In another embodiment the second rim 25b is attached to the stator 8 and projects axially from the stator 8 and extends radially over the radial gap 31 between the rotor 4 and the stator 8, and may or may not form part of the disc shaped flow barrier 18b. The dielectric fluid and air mixture which circulates in the second circulation chamber 13b is therefore hindered in entering the radial gap 31 between the rotor 4 and the stator 8. This is especially important for embodiments where a high pressure is generated by the impeller 20b in order to force the air and dielectric fluid mixture axially through the stator 8 to cool the stator 8.

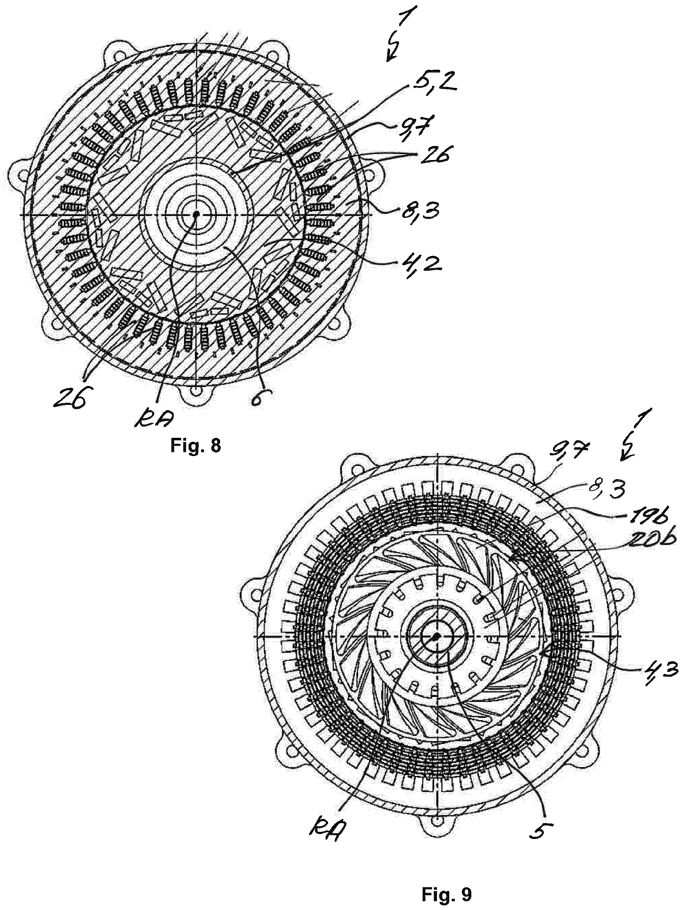

Fig. 8 and Fig. 9 show sectional views of the electric machine 1 in the first embodiment at the second axial end 8b. In Fig. 8, stator teeth 26 of the stator 8 and their position with respect to the rotor 4 are visible. In Fig. 9, the second impeller blades 19b facing the second end plate 10b are visible. Here, the second impeller blades 19b are formed identically to each other and are symmetrically i.e. evenly distributed around the axis of rotation RA. However, deviating shapes/sizes/distributions are also conceivable.

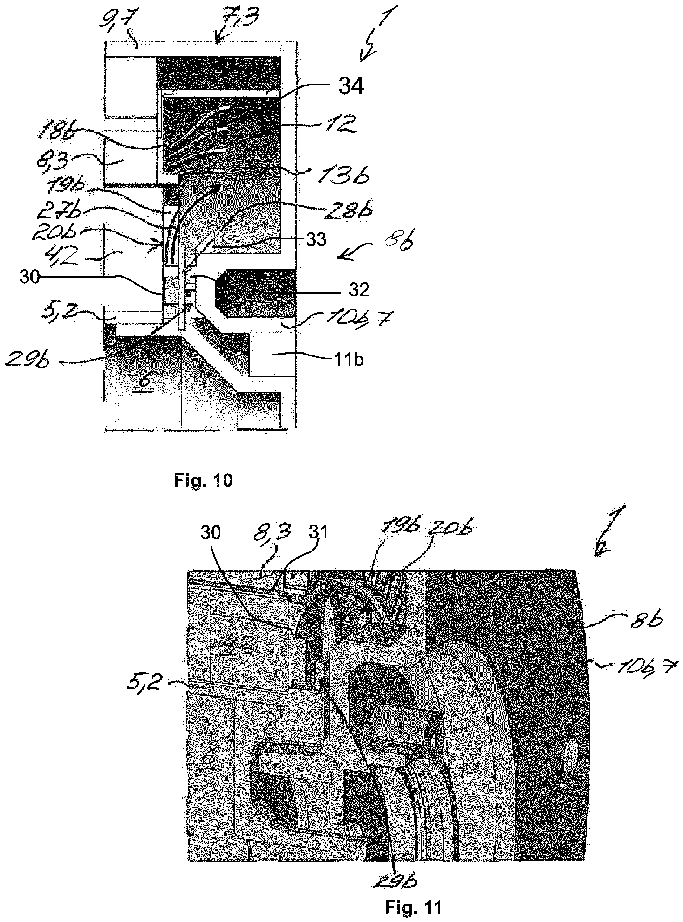

Fig. 10 and Fig. 11 show sectional views of the electric machine 1 in the first embodiment at the second axial end 8b. In Fig. 10, it can be seen that the second impeller blades 19b are shaped such that a second impeller outlet 27b of the impeller 20b directs the flow radially outwardly with an axial component. For this purpose, the back wall 30 of the impeller 20b which carries the impeller blades 19b, extends in the axial direction away from the rotor 4 in the radially outer part of the impeller 20b. The thickness of the back wall 30 of the impeller 20b thus increases towards the radially outer region of the impeller 20b i.e. towards the radially outer diameter of the impeller 20b. This allows the coolant to be directed away from the rotor 4, thereby reducing the entrainment of the coolant by the rotor 4. The coolant, i.e. the air and dielectric fluid mixture, is also directed past the rim 25b, described with reference to Fig. 7, such that coolant which circulates in the second circulation chamber 13b is therefore hindered in entering the radial gap 31 between the rotor 4 and the stator 8 due to the low static pressure created in the circulation chamber 13b by the flow of the coolant from the impeller 20b flowing past the rim 25b, and not directed into the radial gap 31 between the stator 8 and the rotor 4.

In addition, the second impeller blades 19b each include a second flow barrier element 28b that guides the coolant into the area of the second impeller 20b once released out of the shaft cavity 6. In other words, the impeller is shrouded, whereby the flow barrier element 28b is the shroud. The flow barrier element 28b only extends partly in the radial direction, it does not extend to the outer diameter of the impeller 20b.

The second flow barrier element 28b prevents axial flow of the coolant into the area of the second end plate 10b.

In another embodiment the second flow barrier element 28b can be a part of the shaft 5. In another alternative embodiment, the second flow barrier element 28b can be designed as a standalone component - i.e. as a part in form of a disc/ring made out of plastic - and being attached to the shaft 5. In all cases the second flow barrier element 28b rotates with the rotor 4.

In the case that a high pressure is needed to be created in the second circulation chamber 13b, in order to force the air and dielectric fluid mixture through cooling channels 14 in the stator 8 it is necessary to keep oil away from the area of the where seals may be located, this is particularly the case in the region of the shaft 5, and the bearings 11b.

In Fig. 10 and Fig. 11, several second vanes 29b are formed on the second end plate 10b. The stationary vanes 29b are formed to direct the coolant away from an axial gap 32 between the second flow barrier element 28b and the end plate 10b. Through the parasitic drag of the second flow barrier element 28b and the guidance of the radially extending vanes, the oil and gas mixture is accelerated radially outwards through the axial gap 32 into the second circulation chamber 13b, thus limiting the amount of oil in the region of the bearing 11b.

It should be noted that the use of air and dielectric fluid mixture is particularly advantageous as it is the large volume of air which can be efficiently pumped by the impeller 20b which enables the pressure to be maintained in the second circulation chamber 13b which forces the coolant axially through the stator 8. The air can be introduced into the shaft cavity 6 with the dielectric fluid, more particularly with the oil, or separately thereto.

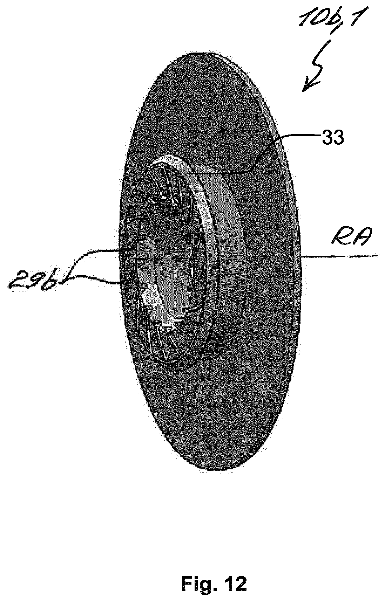

Fig. 12 shows a view of the second end plate 10b in the electric machine 1 in the first embodiment. Here, the second stationary second vanes 29b are clearly visible. The second vanes 29b are formed identically to each other and are symmetrically i.e. evenly distributed around the axis of rotation RA. However, deviating shapes/sizes/distributions are also conceivable.

Referring back to Fig.10, the radially inner surface of the second circulation chamber 13b can be provided with a ring-shaped radially outward projecting baffle 33 in proximity to the axial gap 32, in order to hinder recirculating oil and air mixture from entering the axial gap 32. The baffle 33 extending radially beyond the second flow barrier element 28b.

The dielectric fluid, e.g. oil is introduced into the shaft cavity 6 at one of the axial ends of the shaft cavity 6, whereby the diameter of the shaft cavity 6 increases in towards the centre of the electric machine 1 in the axial direction. This has the effect that the dielectric fluid or oil is accelerated to the maximum velocity within the cavity more efficiently, reducing internal drag losses from coolant flowing in the cavity 6.

### Reference list

- 1.: Machine
- 2.: Rotor group
- 3.: Housing group
- 4.: Rotor
- 5.: Shaft
- 6.: Shaft cavity
- 7.: Housing
- 8.: Stator
- 8a/8b.: First/second axial end
- 9.: Wall
- 10a/10b.: First/second endplate
- 11a/11b.: First/second bearing
- 12.: Flow path
- 13a/13b.: First/second circulation chamber
- 14.: Cooling channels
- 15.: -
- 16.: Cooling inlet
- 17.: Cooling outlet
- 18a/18b.: First/second flow barrier
- 19a/19b.: First/second impeller blades
- 20a/2b.: First/second impeller
- 21.: Outlet chamber
- 22.: Separating element
- 23.: Drain opening
- 24a.: Dividing element
- 25b.: Rim
- 26.: Stator teeth
- 27b.: Second impeller outlet
- 28b.: Second barrier flow element
- 29b.: Second vanes
- 30.: Back wall of impeller
- 31.: Radial gap
- 32.: Axial gap
- 33.: Baffle
- 34.: Winding heads

## Claims

1. Electric machine (1),
- wherein the machine (1) comprises a rotor group (2) comprising a shaft (5) which is rotatable about an axis of rotation (RA) and a rotor (4) which is non-rotatably fixed to the shaft (5),
- wherein the machine (1) comprises a housing group (3) comprising a housing (7) and a stator (8) which is received in the housing (7),
- wherein the rotor group (2) is rotatably arranged in the housing group (3), wherein the stator (8) is radially adjacent to the rotor (4) and encircles the rotor (4) with respect to the axis of rotation (RA),
- wherein at least two axially extending cooling channels (14) are formed in or on the stator (8),
- wherein a first circulation chamber (13a) axially adjacent to the stator (8) is formed at a first axial end (8a) of the stator (8) and a second circulation chamber (13b) axially adjacent to the stator (8) is formed at a second axial end (8b) of the stator (8),
- wherein the machine (1) contains a flow path (12) for guiding a coolant formed at least by the at least two cooling channels (14) and the two circulation chambers (13a, 13b),
**characterized**
- **in that** a coolant inlet (16) of the flow path (12) is formed at the first and/or second axial end (8a, 8b) of the stator (8) and a coolant outlet (17) of the flow path (12) is formed at the first and/or second axial end (8a, 8b) of the stator (8), and
- **in that** the cooling channels (14) extend axially through the entire stator (8) and can be flowed through in the flow path (12) in parallel and/or in series with one another.

2. Machine according to claim 1,
**characterized**
- **in that** the stator (8) contains at least two stator teeth (26) alternated with at least two stator slots and each stator tooth (26) and/or stator slot is assigned a channel group comprising at least one of the at least two cooling channels (14), and
- **in that** at least one of the at least two cooling channels (14) is formed between the two adjacent stator teeth (26) of the stator (8) and/or in the stator tooth (26) of the stator (8) and/or on the stator tooth (26) of the stator (8) and/or in the yoke of the stator (8) and/or on the outside of the stator (8), whereby winding heads (34) of the stator (8) extend into the first/second circulation chamber (13a, 31b) and are arranged to be directly cooled.

3. Machine according to any of the preceding claims,
**characterized**
- **in that** the shaft (5) contains a shaft cavity (6) extending parallel to the axis of rotation (RA), the coolant inlet (16) of the flow path (12) leading into the shaft cavity (6) at the first axial end (8a) of the stator (8) and the shaft cavity (6) being fluidically connected to the first and/or second circulation chamber (13b) at the first and/or second axial end (8b) of the stator (8), or
- **in that** the coolant inlet (16) is formed in the housing (7) at the first and/or second axial end (8a, 8b) of the stator (8) and leads into the first and/or second circulation chamber (13a, 13b), and
- **in that** the coolant inlet (16) is adapted to introduce the coolant, in particular a dielectric fluid, in particular oil, together with air, into the shaft cavity (6) or into the first and/or second circulation chamber (13a, 13b).

4. Machine according to any of the preceding claims,
**characterized**
- **in that** a first/second impeller (20a/20b) is formed on a first/second end surface of the rotor (4) which is aligned transversely to the axis of rotation (RA), and
- **in that** the first/second impeller (20a/20b) comprises a plurality of radially extending blades (19a, 19b).

5. Machine according to claim 4,
**characterized**
**in that** a back wall (30) of the first/second impeller (20a/20b) carries the impeller blades (19b) and extends in the axial direction away from the rotor (4) in the radially outer region of the impeller (20b), for imparting an axial component to the flow through the first/second impeller (20a/20b) away from the rotor (4).

6. Machine according to claim 4 or 5,
**characterized**
- **in that** the first/second impeller (20a/20b) comprises a flow barrier element (28b) or shroud (28b) axially delimiting a flow through the first/second impeller (20a/20b) on one side, and
- **in that** the back wall (30) of the first/second impeller (20a/20b) or the rotor (4) delimiting the flow through the first/second impeller (20a/20b) on the rotor side.

7. Machine according to claim 6,
**characterized**
**in that** outer diameter of the flow barrier element (28b) is less than the outer diameter of the first/second impeller (20a/20b).

8. Machine according to any one of claims 4 to 7,
**characterized**
**in that** a first/second axial gap (32) extending transversely to the axis of rotation (RA) is formed between the housing (7) and the first/second impeller (20a/20b).

9. Machine according to claim 8,
**characterized**
**in that** the first/second axial gap (32) is minimized and the axial width of the axial gap (32) is preferably less than 2 mm.

10. Machine according to any one of claims 4 to 9,
**characterized**
**in that** at least two first/second vanes (29b) are formed on the housing (7), wherein the first/second vanes (29b) are arranged opposite the first/second impeller blades (19a/19b) of the rotor (4).

11. Machine according to any one of claims 4 to 10,
**characterized**
**in that** the first/second impeller blades (19a/19b) of the first/second impeller (20a/20b) are backswept.

12. Machine according to any one of claims 4 to 11,
**characterized**
- **in that** the first/second impeller (20a/20b) contains a tangentially outwardly directed first/second impeller outlet (27b) and a negative attack angle, and/or
- **in that** the first/second impeller (20a/20b) contains a first/second impeller outlet (27b), wherein a circumferential first/second rim (25b) and/or a circumferential first/second labyrinth seal are formed on a first/second flow barrier (18a/18b) disposed in the first/second circulation chamber (13a/13b) surrounding the first/second impeller outlet (27b).

13. Machine according to any one of claims 4 to 12,
**characterized**
- **in that** the first and/or second impeller (20a/20b) is formed by overmolding at least part of the rotor (4), or
- **in that** the first and/or second impeller (20a/20b) forms part of a balance ring which is attached to the rotor (4).

14. Machine according to any of the preceding claims,
**characterized**
**in that** a disc-shaped first/second flow barrier (18a/18b) aligned transversely to the axis of rotation (RA) is arranged in the first/second circulation chamber (13a/13b).

15. Machine according to at least claims 4 and 14,
**characterized**
**in that** the first/second flow barrier (18a/18b) represents the first/second delimiting surface for the first/second impeller (20a/20b) of the rotor (4).

16. Machine according to any of the preceding claims,
**characterized**
**in that** the housing (7) comprises a first/second dividing element (24a), wherein the first/second dividing element (24a) is arranged in the first/second circulation chamber (13a/13b) and divides the first/second circulation chamber (13a/13b) into at least two first/second chambers fluidically connected to each other.
